# EUROPEAN PATENT APPLICATION

(11) **EP 0 522 993 A2**
(43) Date of publication of application: **13.01.1993**
(21) Application number: 92500089.5
(22) Date of filing: 09.07.1992
(51) Int. Cl.: H04H 1/00, H04B 5/00, H04B 1/66

(54) **Message recording and broadcasting system**

(30) Priority: 11.07.1991 ES 9101630
(71) Applicant: Sauro, Emilio Garido, Jerez de La Frontera, Cadix (ES); Sanchez, José Montenegro, Jerez de La Frontera, Cadix (ES)
(72) Inventor: Sauro, Emilio Garido, Jerez de La Frontera, Cadix (ES); Sanchez, José Montenegro, Jerez de La Frontera, Cadix (ES)
(74) Representative: Ungria Lopez, Javier

(57) **Abstract**

The system according to the invention is designed for the recording and corresponding emission of messages which are to be received by persons moving on foot or in vehicles, the system comprising at least one message "recording module" and two message "reproduction modules," the first comprising a set of means for the receipt of signals which are slected for re-emission by a single channel to the "reproduction modules" which in turn comprise an audio frequency receiving and recording system. The signals are emitted in the form of messages from the "reproduction modules" in serial or parallel form.

## Description

This invention relates to a system for the recording and distirbution of messages which are to be received by persons in vehicles or preferably on foot, moving in the vicinity of places about which information is needed. The recorded messages are repeatedly transmitted to receivers which respond to them within a previously specifically determined radius of coverage.

There are many places which on account of their special nature, attractiveness, beauty, antiquity, etc., require additional information to supplement mere contemplation. This information has normally been transmitted by means of either explanatory amphlets or booklets, or directly by the spoken voice.

In fact the form of explanation most convenient to the spectator is the spoken voice, as written forms reduce opportunities for observation and are cumbersome.

Personal explanation by voice implies proximity to the source of sound, giving rise to a gathering of observers which impedes contemplation with the necessary enjoyment.

Description by voice, either directly or through loudspeakers, has great limitations. This is partly because of the noise pollution to which it gives rise, and also because there are limitations deriving from the nature of the place, such as churches, synagogues, and others where special concentration is required.

There are also places, which are not necessarily monuments, where information is required, and the entrances to vilalges or towns of special tourist or other interest can be mentioned as examples, for which the invention offers a special solution.

This invention provides the means required to transmit information, without giving rise to noise pollution, directly to individuals, preventing the gathering of crowds, providing the information at all times, without any restriction on time of day, day or year, which allows the information provided to be altered at any time, so it can therefore be constantly updated.

There is no doubt that this invention offers a unique powerful low-cost medium for the purposes of information and culture.

The method avoids moving mechanical means, so it is highly reliable in operation, without virtually any diminution or deterioration of the original quality.

The invention fundamentally comprises three well-differentiated modules which allow messages to be recorded in a preferably anolog/digital form, which are then reproduced and emitted repeatedly and uninterruptedly. The transmission means preferably comprise electrical and magnetic fields generated by an emitter or transmitter located very close to the place of interest. The radiated electrical and magnetic fields are received by a receiver which is provided with circuitry for processing the received signal, which is strictly limited to a wall-defined radius of coverage so that there is no interference from any adjacent radiated information service.

The radius of action can be adjusted and is preferably set to a radius of between 50 and 500 metres.

The receiver is portable, of small size and for personal use, and is provided with earphones so that it cannot be heard by any other person close to the user.

The emission frequency is stable at a given value, so as to produce minium disturbance in the radioelectrical spectrum.

The broadcast messages, which have previously been recorded on audio memories, are available in a form so that they can be amplified or converted in two ways. One is called "series" operation, because when the messages are reproduced they are reproduced one after the other, using a single communication channel. The other form is called "parallel" operation, because when the messages are reproduced they all begin at the same moment and last for the same length of time, so that in this situation one communication channel is necessary for each message. Transmission of a sequence of messages in "series" takes place as a sequence, unlike the transmission of a sequence of messages in "parallel," which requires frequency multiplexing to avoid overlap. The three modules mentioned are called the "recording module," the "serial reproduction module" and the "parallel reproduction module."

The funciton of the first of these consists of unifying the different existing systems for generating audio information, fitting them for a single information transfer channel, and it is subsequently this single channel which provides information to the reproduction modules.

Thee is one fundamental difference between the "recording module" and the reproduction modules, and this is that while the former only processes messages one by one, the latter can store various messages, as they consist of a set of voice digitiser units. These voice digitiser units are identified by a binary code number.

The reproduction modules convert the analog information (messages) into digital information and store it in this form, making it available for orderly reproduction in a repetitive fashion.

The practical application of this system involves the use of a "recording module" and a "reproduction module", which may be a "series" version or a "parallel" version.

Sets of both modules are available at the place where the emission system is located so that new information can be recorded in order to be reproduced immediately by the system.

The form of the practical embodiment, with two well-generate signals as part of their reproduction function. The system can operate using known means such as radiodiffusion, ultrasound, infrared, etc., equally satisfactorily, with or without an "access key" by simple control of the coverage by the conventional system of silencing the receiver. In any event the receiver used is of the hand held type, with carrier demodulation of the type indicated, with a reduced range.

The first thing which has to be provided between the two modules is the physical connection in order to establish communication, and any remote means of communication available is used for this purpose. Both modules have the circuitry necessary to deal with this two-directional communication. If the connection is a cable it has the appropriate connectors. If it is via a telephone line the "recording module" "calls" the telephone number to which the "reproduction module" is connected either manually or automatically and the latter in turn has the circuitry necessary for telephone line connection and disconnection. If the link is a radio link it has a communication channel with the carrier frequency authorised by the Telecommunications Authorities. In the latter case the "reproduction module" incorporates a receiver/emitter which is permanently set to receive a signal emitted at a particular time by the emitter/receiver provided for the purpose in the "recording module." Note that this latter double emitter/receiver set mentioined is different from those previously mentioned and is only used as a possible further means of communication between the recording and reproduction modules.

Once the basic link has been established the process of message transfer from the "recording module" to the "reproduction module" (series or parallel) is initiated manually. In this connection it should be remembered that the latter has various voice digitiser units distinguished modules (recording module and reproduction module) has been designed to allow remote operation of the recording module, which can have different forms depending on the source of the signal reaching it, with only one "series reproduction module" or "parallel reproduction module" being necessary, depending on the type of message sequencing which is considered desirable in each individual case.

As has been stated, the various existing systems for the generation of audio information such as magnetic tape, cassettes, microphones, can be used as a means of entering a message into what has been called the "recording module." The functions of this "recording module", apart from unifying these existing systems for processing audio information, are to allow communication between the former and the "reproduction module," by either telephone, cable or radio, using a specific communications protocol. The output signal from the "recording module" is its input message accompanied by appropriate systems to allow communication with and transfer of the message to the "reproduction module." The main function of the "reproduction module" is to reproduce the messages which it has stored as a consequence of being linked at a given time with the "recording module," repeatedly, either in series or in parallel. Of course the reproduction function has to be suspended during connection for the transfer of a message between the two modules, and this is automatically restored when this connection has been terminated. All these connections, suspension of reproduction, transfer of a new message, and restoration of reproduction functions, are brought about by a series of protocol signals between the "recording module" and the "reproduction module" and vice versa.

The "series" and "parallel" "reproduction modules" which are independent and interconnected together by means of sequencing circuitry in one of two ways, in series or in parallel, giving rise to two types of reproduction modules. Each voice digitiser unit itself has the capacity to digitise and record the message received in its memory, and subsequently to reproduce it, all through using precise specific electronic control signals generated by the sequencing circuitry, which is subsequently referred to as the "sequencing unit."

By pressing a key located in the "recording module" a "digital signal" which in turn consists of the "access key" and an "identifier code" is sent to the "reproduction module." The "access key" is different depending on whether the "reproduction module" is of the series or parallel type, and the "identifier code" indicates the voice digitiser unit in which the message is being recorded or will be recorded, as appropriate; obviously before the key in the "recording unit" is pressed it will have been necessary to select the "send key" and the "identifier code." In order to make the system more versatile it is permissible for several "reproduction modules" to have the same or different "access keys," responding to those received which coincide with their own. Every "reproduction module" which receives its own "access key" automatically ceases the reproduction in progress, sends the "recording module" a "confirmation tone" of a specific audible frequency and resets to the message receive condition. When the "recording module" receives the "confirmation tone" of a specific audio frequency it immediately sets itself to send the message to the "reproduction module."

So far the protocol for the start of a message has been explained, the end of message protocol will now follow.

The operator of the "recording module" knows when the message is terminated, whereupon he presses another key, by which another "digital signal" is sent to the "reproduction module," and this time the same "connection key" can be used for all and there is no need for a "code" as in the case of the start of message digital signal. When the "reproduction module" detects this end of message signal it confirms this fact by sending another fixed frequency audio tone to the "recording module", by means of which the operator of that unit knows that the message has been transmitted satisfactorily and the "reproduction module" then acts automatically, continuing its main function of reproducing messaes which have already been stored.

A practical embodiment will now be described with reference to the appended drawings by way of a non-restrictive example. In the drawings:

Figure 1 shows the succession in time of the message signal which is to be recorded in the "reproduction module" accompanied by the corresponding start and end of message protocols.

Figure 2 shows the succession in time of the signal which is to be reproduced repetitively in the case of a "series reproduction module" and its corresponding frequency spectrum.

Figure 3 shows the succession in time of the signals which are to be reproduced repetitively in the case of a parallel reproduction module, and its corresponding frequency spectrum.

Figure 4 is a block diagram of the "recording module."

Figure 5 is a block diagram of the "series reproduction module."

Figure 6 is a block diagram of the "parallel reproduction module."

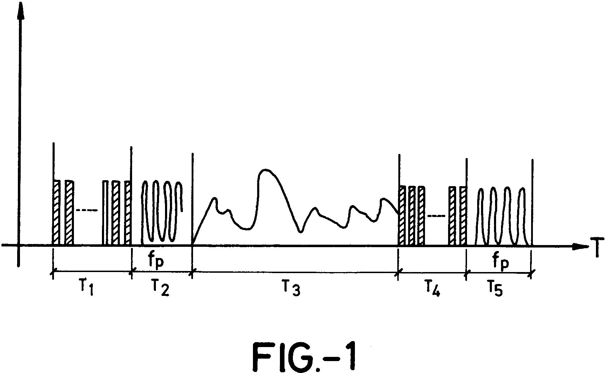

Figure 1 shows a sequence of signals with amplitude along the ordinate axis and time along the abscissa. When a key is pressed in the "recording module" a digital signal consisting of two parts, an "access key", represented by five trinary digits (numbering system to the base 3) and a code consisting of four binary digits (numbering system to the base 2), is sent to the "reproduction module" during T1. The "reproduction module" (series or parallel) is identified through the "access key" and the voice digitiser unit within this "reproduction module" is identified by the binary code. When these two items have been checked in the "reproduction module" the latter sends the "recording module" an audible tone of frequency fₚ, during T2 which indicates that it can begin sending the message during T3. It is the responsibility of the operator to know and time the duration of the messages in relation to the recording time available in the voice digitiser units so that he can press a key to indicate the end of the message. When this key is pressed an "end of message key" is passed tp the "reproduction module" during T4 and this is confirmed during T5 by an audio tone of frequency f_{f} which is different from fₚ. This concludes the stage of interaction between the recording and reproduction modules. The electronic circuitry necessary for completing this stage is the same for the two classes of "reproduction modules" (series and parallel.)

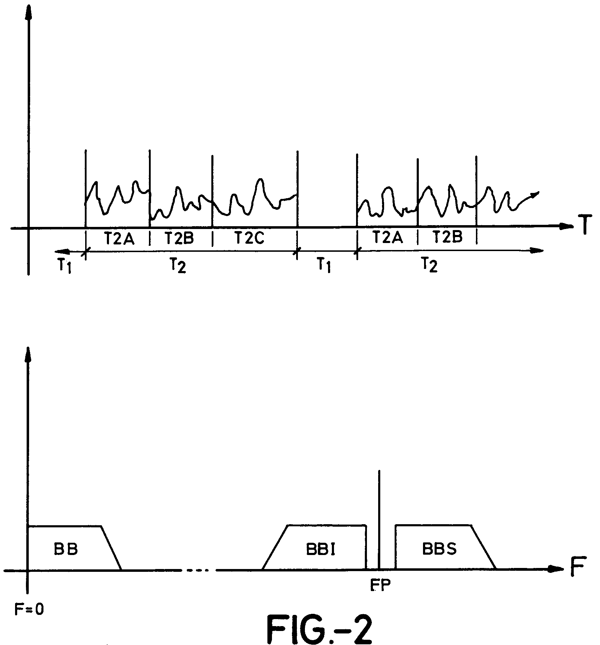

Figure 2 shows the way in which messages are reproduced by the "series reproduction module." A "digital signal" can be interpolated optionally during T1 and the information recorded in each voice digitiser identified by T2A, T2B, T2C, etc., is reproduced in series during T2. Given that in this case both recording and reproduction take place in a time sequence only one communication channel is required and as a consequence a conventional simple transmission system for this information can be used, as outlined in the frequency spectrum indicated, where BB is the base band, FP is the carrier frequency and BBI and BBS are the upper and lower side bands respectively.

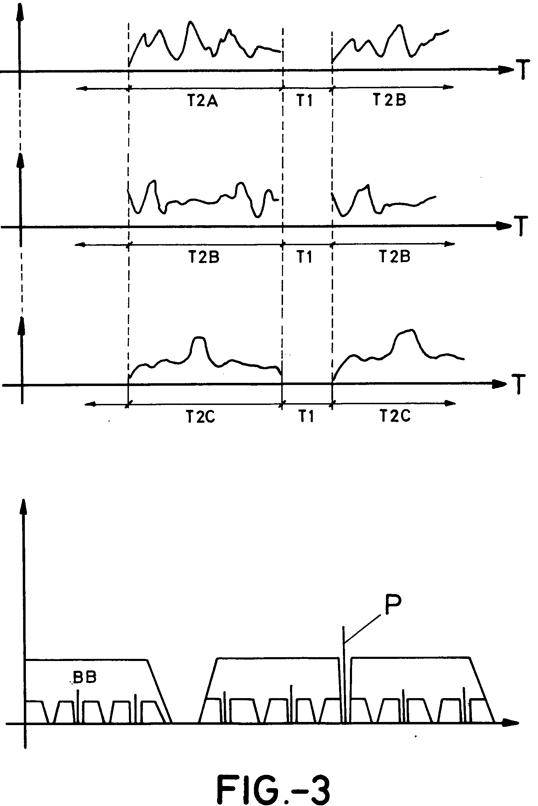

Figure 3 shows the manner in which the messages are reproduced by the "parallel reproduction module." As before a "digital signal" can be optionally incorporated during T1. All the messages must have the same length of time T2A=T2B=T2C, or if this is not the case one of these must be made a master and the others slaves. Various communication channels within the frequency spectrum must be used in order to transmit these messages in parallel, so frequency multiplexing is necessary. The method of modulating the carrier and the subcarriers is in no way restrictive as these are procedures which are universally used in the current state of the art. In this Figure 3 representing the diagram of the frequency spectrum, BB is the base band and P is the main carrier.

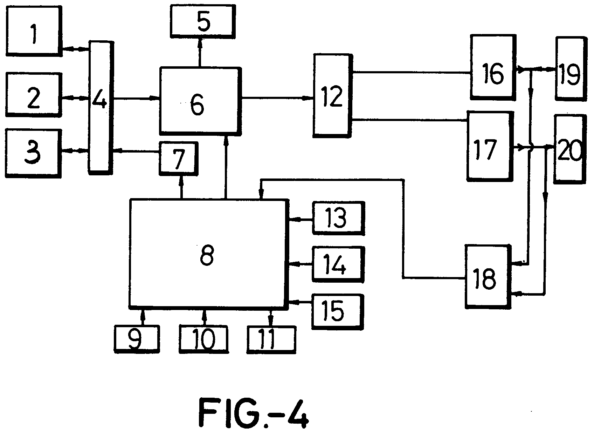

Figure 4 shows a functional block diagram of the "recording module." 1, 2 and 3 represent different sources of information which can contain the message (cassette, microphone, magnetic recorder, etc.) which are selected in a module 4 and operated (if they have remote control) from that module. 6 contains a linear mixer for the control (start and end of message) signals and message signals. The corresponding sounds are monitored in 5.

7 represents the means of activating the sources of information by remote control.

Reference number 8 indicates the circuits for controlling and sequencing the protocol operations, both at the start of the message and at the end of the message, by sending the "access key" and the "identifier code." It waits for receipt of confirmation before proceeding to activate the remote control and beginning reproduction of the magnetic recorders or markers as appropriate before anyone starts to speak into the microphone. When the operator observes that the message has been completed, allowing the end of message "access key" to be sent by pressing a key, he waits for confirmation from the marker indicating correct completion of the process. This module 6 is brought into action by a start of message activating key 9 and an end of message activating key 10. 11 shows the beginning and end of message confirmation markers. 13 represents the binary switches which have to be positioned before the process begins in order to indicate the "access key." 14 shows the binary switches, which have to be positioned before the process begins, to indicate the voice digitiser unit of the "reproduction module." 15 represents the binary switches for indicating the end of message "access key", which again has to be positioned before the process begins.

Reference 12 represents the selected output selector (telephone line, direct cable, radio link, etc.), and in this example only two links are shown: the telephone link and the direct cable connection. Reference 16 shows the direct connection link by cable to the "reproduction module." Reference 17 shows the connection to the telephone line, with a previous manual or automatic call to the appropriate telephone number.

18 establishes the connection between the two means mentioned to receive the confirmation messages, and detection and despatch them at 8.

References 19 and 20 represent the connection cables to the "reproduction module" and the telephone line respectively.

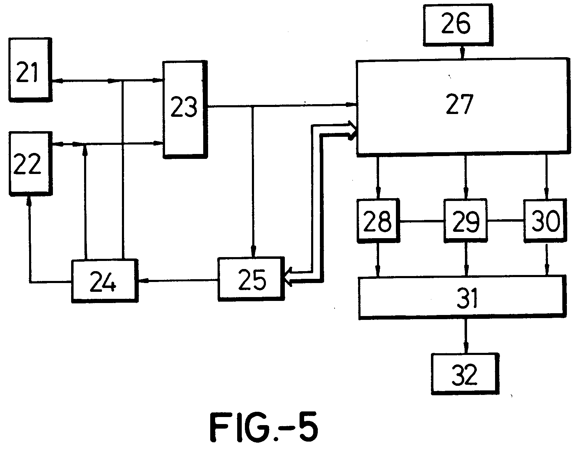

Figure 5 shows the "series reproduction module", where 22 and 23 are the possible connections to the "recording module" via the direct connection cable and telephone line respectively. Block 22 also contains the circuitry necessary for detecting a telephone call, and automatic connection and disconnection when it receives instructions from block 24. All the possible inputs converge into a single input in block 23, bearing in mind that only one of these alternatives is used in each message reception session. The signal which leaves block 23 passes to block 25 and block 27. The "access key" is decoded in block 25 and the "identifier code" for the appropriate voice digitiser unit (VDU) is determined. Controls to block 24 leave this block 25 to activate the corresponding confirmation signals and to block 27 for control of the sequencer in the series system. The signal from block 3 for selecting its analog part or the message to be recorded also reaches sequencer or block 7. Reference 26 represents establishment of the fixed options, such as the installed VDU number and whether the system is serial or parallel, for comparison with the digital signal received from the "recording module" and sending the confirmation signal if appropriate from block 27. Other functions of the sequencer indicated by reference 27 are suspension of the reproduction function, start of recording in the appropriate VDU and stopping of the recording with restoration of the repeated reproduction funciton. Being of the serial type, all the VDU indicated by references 28, 29 and 30 are each interconnected with the next. The outputs from the reproductions are summed linearly in block 31 where electronic connection is involved, because functionally there will only be a signal in one of these at any time because of reproduction in series. Finally reference 32 represents modulation of the emission signal and the interpolation, if necessary, of the "digital signal."

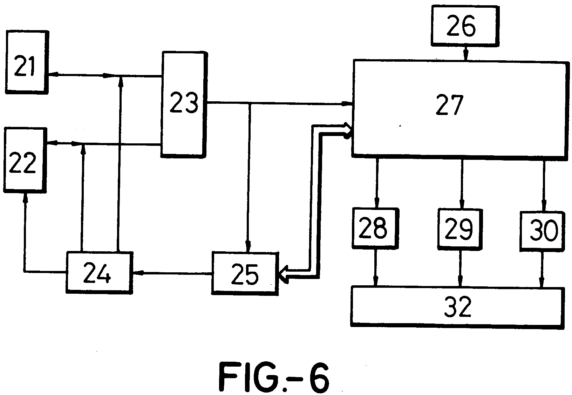

Figure 6 shows the shows the "parallel reproduction module" where references 21 to 30 correspond to blocks performing the same functions as those described in the previous figure, and therefore having the same reference numbers, there being one exception in the structure of the circuitry of block 27, given that this is a parallel system, as explained in this description. Reference 32, as in the previous figure, in this case represents modulation of the emission system and interpolation in time, if necessary, of the "digital signal."

## Claims

1. A system for the recording and emission of messages designed so that a particular type of information can be transmitted directly by audio means in specific places to persons moving on foot or in vehicles within a specific radius of coverage, characterised in that it comprises at least one message "recording module" and two message "reproduction modules," the former comprising a set of means for receiving signals having an audio content from a plurality of sources corresponding to these signals which are selected for re-emission by a communication channel to the "reproduction modules," which comprise a system for the receiving and recording of audio frequencies, preferably a static digital memory, for which an analog/digital converter is available, these signals being emitted repeatedly and uninterruptedly in the form of messages from the "reproduction modules" in series (one message after another) or in parallel (all messages simultaneously), for which purpose it includes transmission means which uses these signals as a modulation base band, the said messages being received in receivers appropriate to the type of transmission.

2. A system for the recording and emission of messages according to claim 1, characterised in that the "recording module" includes means for processing the audio signal received and selected, and means for sending this signal to the "reproduction modules," and also including means for sending ditial signals or access keys which are identified by the "reproduction module" and by the unit in which the message will be recorded; the "reproduction module" confirming the requested selection to the recorder and the recording being performed by means of another two confirmation and end of message keys.

3. A system for the recording and emission of messages according to claims 1 and 2, characterised in that two-directional means of communication is established between the "recording module" and the "reproduction modules" through which information about access keys and messages is transferred from the "recording module" to the "reproduction modules" and confirmations are passed in the reverse direction.

4. A system for the recording and emission of messages according to the foregoing claims, characterised in that the "recording module" has a selector and activation block (4) for the different sound sources (1, 2, 3) connected to a linear mixer (6) for the control and message signals and an activation block for remote control (7) of the said sources (1, 2, 3); the linear mixer (6) is connected to a monitoring block (5) and a control and sequencing stage (8) for the start and end of message protocol operations by sending the access key and the identifier code, which includes a start of message activating key (9) an end of message activating key (10), markers (11) confirming the start and end of message, trinary switching means (13) indicating the connection key by means of a previous position setting, binary switching means (14) which indicate a voice digitiser unit in the "reproduction module" by means of a previous position setting, and other trinary switching means (15) which indicate the end of message key again by a previous position setting; with the special feature that the linear mixer (6) is also connected to an output channel selector (12) which may be direct (16), telephonic (17) or of another type, the corresponding output connection cables (19 and 20) receiving signals which are delivered to a confirmation message receiving and detection block (18) which is in turn connected to the control and sequencing stage (8.)

5. A system for the recording and emission of messages according to claims 1, 2 and 3, characterised in that the "series reproduction module" is connected to the "recording module" either directly (21) or by a telephone line (22) or by other means, all possible inputs converging into a single input (23) which leads to a decoder (25) which determines the access key and the identifying code and which connects to the confirmation block (24) which sends the confirmation signals to the "recording module" by the same connection links mentioned above (21 or 22); provision is made for the decoder (25) also to connect to a sequencer (27) to which the sole input (23) also leads, from which it selects the message to be recorded, and the output signal from a block (26) which determines the fixed options such as the number of the voice digitiser units (28, 29, 30) the series or parallel system, or others; these units (28, 29, 30) are connected in cascade when the system is a series system and their outputs go to a linear summator (31) whose output passes to an emission modulator (32) where the digital signal is interpolated where necessary.

6. A system for the recording and emission of messages according to the foregoing claim, characterised in that the "parallel reproduction module" has the same structure as the "series reproduction module" with the special feature that the sequencer (27) in the said "parallel reproduction module" has circuitry appropriate to the parallel system and in that the voice digitiser units (28, 29, 30) are disconnected from each other, the outputs from these units (28, 29, 30) being connected directly to the modular emission block (32), avoiding use of the linear summator (31.)
